# EUROPEAN PATENT APPLICATION

(11) **EP 4 592 879 A1**
(43) Date of publication of application: **30.07.2025**
(21) Application number: 25152164.7
(22) Date of filing: 16.01.2025
(51) Int. Cl.: G06F 21/60, G06F 21/64, H04L 9/08, H04L 9/32, H04L 9/40

(54) **SECURE KEY REPLACEMENT SYSTEM, SECURE KEY REPLACEMENT DEVICE AND SECURE KEY REPLACEMENT METHOD**

(30) Priority: 23.01.2024 IL 31049924
(71) Applicant: Winbond Electronics Corp., Taichung City, Taiwan. (TW)
(72) Inventor: KALUZHNY, Uri, Taichung City (TW); TASHER, Nir, Taichung City (TW); ADMON, Itay, Taichung City (TW)
(74) Representative: Becker, Eberhard

(57) **Abstract**

A system (10) includes an active signing server (14) including a secure storage and processing unit (16) and an interface (26). The secure storage and processing unit (16) is configured to store a first private key (30), generate signatures (38) using the first private key (30) for authentication by devices storing a first public key (32) forming a key pair with the first private key (30) and sign a replacement command using the first private key (30), the replacement command being configured to be used to instruct the devices (20) to replace the first public key (32) with a second public key (32) forming a key pair with a second private key (30). The interface is configured to provide the signatures to the devices (20) and the replacement command to at least one entity, which is remote to the active signing server (14) and the devices (20) for storage.

## Description

### FIELD OF THE INVENTION

The present invention relates to computer systems, and in particular, but not exclusively to, secure key replacement.

### BACKGROUND OF THE INVENTION

A signing server or other centralized entity may provide data to devices (such as secure flash devices) signed with a private key of the signing server yielding a signature. The devices each possess a corresponding public key and can therefore authenticate the data against the signature using the public key. It may be important to prevent the public key from being overwritten by an attacker who wants to spoof the signing server.

On the side of the signing server, the private key may become lost, corrupted, or otherwise unavailable, so that signatures can no longer be generated using the private key for authentication by the devices using the corresponding public key. One solution is to make backup copies of the private key and store the private key in one or more secure locations if needed.

### SUMMARY OF THE INVENTION

There is provided in accordance with an embodiment of the present disclosure, a secure key replacement system, including an active signing server including a secure storage and processing unit configured to store a first private key, generate signatures using the first private key for authentication by devices storing a first public key forming a key pair with the first private key, and sign a replacement command using the first private key, the replacement command being configured to be used to instruct the devices to replace the first public key with a second public key forming a key pair with a second private key, and an interface configured to provide the signatures to the devices and the replacement command to at least one entity, which is remote to the active signing server and the devices for storage, the at least one entity including an orchestration server and/or at least one other signing server.

There is also provided in accordance with another embodiment of the present disclosure, a secure key replacement device, including a secure storage configured to securely store a first public key forming a key pair with a first private key stored by an active signing server, and a secure processor configured to reject an instruction to replace the first public key, the instruction not being authorized by a signature formed by the active signing server using the first private key, receive a replacement command signed by the first private key, the replacement command being configured to be used to instruct the device to replace the first public key with a second public key forming a key pair with a second private key stored by a new active signing server, authenticate the replacement command using the first public key, and replace the first public key with the second public key responsibly to authenticating the replacement command using the first public key.

There is also provided in accordance with still another embodiment of the present disclosure a secure key replacement method, including storing a first private key, generating signatures by an active signing server using the first private key for authentication by devices storing a first public key forming a key pair with the first private key, signing a replacement command by the active signing server using the first private key, the replacement command being configured to be used to instruct the devices to replace the first public key with a second public key forming a key pair with a second private key, and providing the signatures to the devices and the replacement command to at least one entity, which is remote to an active signing server and the devices for storage, the at least one entity including an orchestration server and/or at least one other signing server.

There is also provided in accordance with still another embodiment of the present disclosure, a secure key replacement method, including securely storing a first public key forming a key pair with a first private key stored by an active signing server, receiving a replacement command signed by the first private key, the replacement command being configured to be used to instruct the device to replace the first public key with a second public key forming a key pair with a second private key stored by a new active signing server, authenticating the replacement command using the first public key, and replacing the first public key with the second public key responsibly to authenticating the replacement command using the first public key.

### BRIEF DESCRIPTION OF THE DRAWINGS

The present invention will be understood from the following detailed description, taken in conjunction with the drawings in which:
Fig. 1 is a block diagram view of a secure key replacement system constructed and operative in accordance with an embodiment of the present invention.
Fig. 2 is a flowchart including steps in a method of operation the system of Fig. 1.
Fig. 3 is a flowchart including steps in a method in a device in the system of Fig. 1.
Fig. 4 is a block diagram view of the system of Fig. 1 illustrating the active signing server or the active private key becoming inactive or otherwise unavailable.
Fig. 5 is a flowchart including steps in a method of operation of the system of Fig. 1 in response to the active signing server or the active private key becoming inactive or otherwise unavailable.
Fig. 6 is a block diagram view of the system of Fig. 1 illustrating assignment of a new active signing server.
Fig. 7 is a flowchart including steps in a method in a device in the system of Fig. 1 after assignment of the new active signing server.

### DETAILED DESCRIPTION OF EMBODIMENTS

### OVERVIEW

As previously mentioned, a signing server may backup its private key in one or more secure locations in the event that the private key that is in use becomes lost, corrupted, or otherwise unavailable. However, private key backup may not provide a solution to the problem in some cases, one of which is mentioned below.

The National Institute of Standards and Technology (NIST) recommends using hashed-based signatures (i.e., stateful signatures), which are one-time signatures using an index that is advanced each time a signature is generated. It has the advantage that it cannot be cracked by a quantum computer. However, it is critical for the same index not to be used twice as the signatures will be broken. Therefore, backing up a private key is not enough, and the index would also need backing up and for this there is no practical solution. Hence, NIST recommends always keeping the index and key together in a hardware module (e.g., hardware security module (HSM)), which increments the index each time it uses the key, and therefore the key cannot be backed up as if you remove the key, you lose the connection with the index and cannot ensure the security of the signature scheme. The signing server is an entity which includes an HSM for securely storing the private key and performing cryptographic processes (e.g., generating signatures) with the private key.

If the private key cannot be backed up, then if the private key becomes lost, corrupt, or otherwise unavailable, it is proposed that a new key pair is generated by the signing server or another signing server to sign data for authentication by the devices. Generating a new key pair by itself, however, does not yet solve the problem, since each device has the public key which corresponds to the "lost" private key installed therein in a protected fashion so that the public key cannot be replaced. Therefore, the device has now become useless in this regard as it cannot overwrite the old public key with a new one, and the ability of a signing server to provide signatures to all the devices is lost forever.

Embodiments of the present invention solve the above drawbacks by providing a system which can use a replacement command generated from an original private key when the original private key is unavailable (e.g., lost, corrupted or otherwise). Next, the devices are sent to replace original public key with a new public key to recover from the situation where the private key is unavailable.

### SYSTEM DESCRIPTION

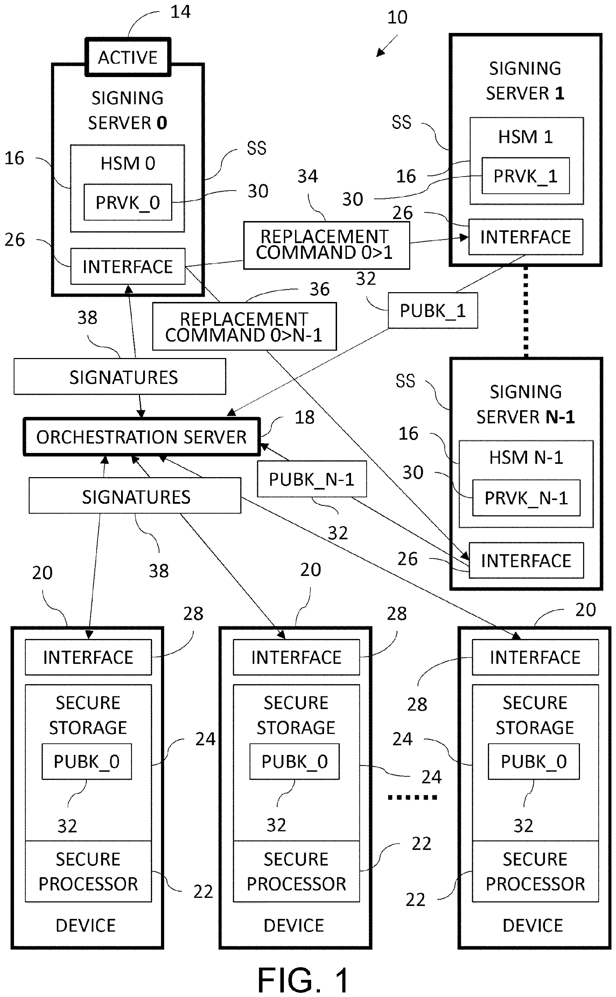

Reference is now made to Fig. 1, which is a block diagram of a secure key replacement system (referred as system) 10 constructed and operative in accordance with an embodiment of the present invention. The system 10 includes N signing servers SS including an active signing server SS and N-1 non-active signing servers SS. N may be any suitable number greater than, or equal to, 2. As shown in Fig. 1, signing server 0 serves as the active signing server 14 at this time, and signing server 1 to signing server N-1 serve as backup signing servers. The system 10 also includes an orchestration server 18 and devices 20, and devices 20 is, for example, a secure flash storage device.

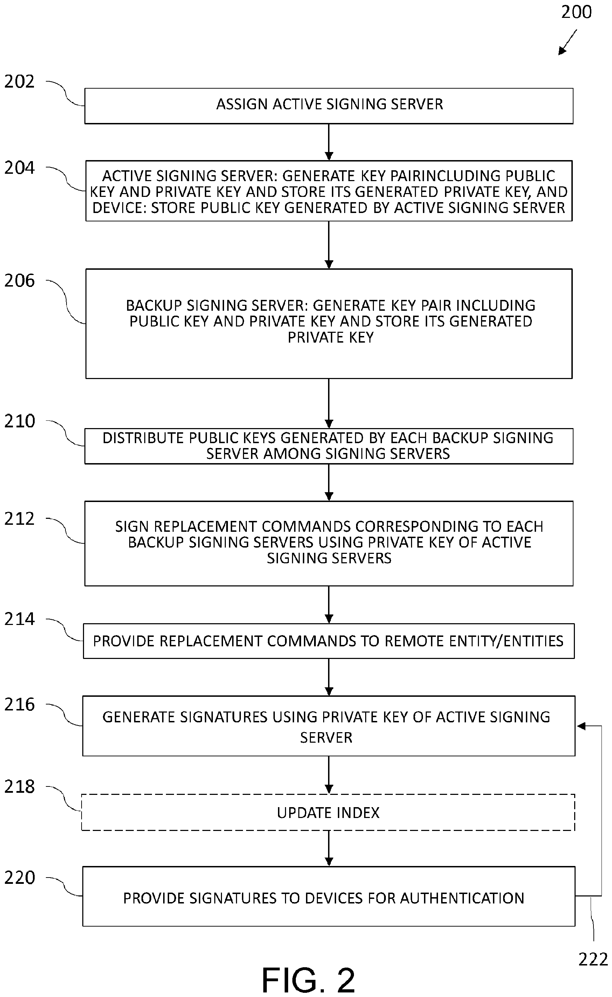

Each signing server SS includes a secure storage and processing unit 16 (e.g., a hardware security module (HSM)) and an interface 26 for sharing data with other ones of the signing servers SS, the orchestration server 18 and the devices 20 (e.g., via the orchestration server 18). In the example of Fig. 1, signing server 0 includes the secure storage and processing unit 16 (HSM 0), signing server 1 includes the secure storage and processing unit 16 (HSM 1), and signing server N-1 includes HSM N-1. A secure storage and processing unit 16 (HSM) is a physical computing device that safeguards and manages secrets, performs encryption and decryption functions for digital signatures, strong authentication, and other cryptographic functions. Each secure storage and processing unit 16 is configured to store one or more private keys 30 (PRVKs), and optionally save an index associated with private key 30. In the example of Fig. 1, the secure storage and processing unit 16 (HSM 0) is storing the private key 30 (PRVK_0), the secure storage and processing unit 16 (HSM 1) is storing the private key 30 (PRVK_1), and the secure storage and processing unit 16 (HSM N-1) is storing the private key 30 (PRVK_N-1), as described in more detail with reference to Fig. 2.

Each device 20 includes an interface 28 for sharing data with the orchestration server 18 and each of signing servers SS. Each device 20 also includes a secure processor 22 and a secure storage 24. The secure storage 24 of each device 20 is configured to store a public key (PUBK) 32 (e.g., the public key 32 (PUBK_0) forming a key pair with the private key 30 (PRVK_0) of the active signing server 14 (signing server 0)).

Fig. 2 is a flowchart 200 including steps in a method of operation the system 10 of Fig. 1. Reference is also made to Fig. 1 and Fig. 2.

The orchestration server 18 is configured to assign signing server 0 as the active signing server 14 (step 202). The secure storage and processing unit 16 of signing server 14 (signing server 0) is configured to generate key pair and store the generated private key 30 (PRVK_0), and optionally store the index related to the private key 30 (not shown). The secure storage and processing unit 16 of the active signing server 14 (signing server 0) is configured to distribute its generated public key 32 (PUBK_0) to each device 20. The public key 32 (PUBK_0) of the active signing server 14 (signing Server 0) is then stored in the secure storage 24 of each device 20 (step 204). In one embodiment, the secure storage and processing unit 16 of the active signing server 14 (signing server 0) is also configured to distribute the public key 32 (PUBK_0) generated to all signing servers SS and/or the orchestration server 18 (not shown).

Each of the secure storage and processing unit 16 (HSM 1 to HSM N-1) of the backup signing servers (signing server 1 to signing server N-1) are configured to generate key pair (public key 32 (PUBK_1 to PUBK_N-1) and private key 30 (PRVK_1 to PRVK_N-1)) and store the generated private key 30 and optionally store an index (not shown) related to the private key 30 (step 206). In other words, the secure storage and processing unit 16 of the N-1 signing servers are configured to generate N-1 corresponding key pairs, each key pair including a respective public key and a respective private key. As shown in the example of Figure 1, HSM 1 generates a key pair including the public key PUBK_1 and private key PRVK_1 and stores the generated private key PRVK_1. HSM N-1 generates a key pair including the public key PUBK_N-1 and private key PRVK_N-1 and stores the generated private key PRVK_N-1, and so on. In one embodiment, optionally, the secure storage and processing unit 16 of the backup signing servers SS is configured to distribute the public key 32 generated by it to all signing servers SS, and/or the orchestration server 18 (step 210).

The secure storage and processing unit 16 of the active signing server 14 (signing server 0) is configured to sign the replacement command corresponding to each backup signing server SS using its private key 30 (PRVK_0) (step 212). Where N is equal to 2, there will be one replacement command. Wherein, each replacement command may include: the public key of each backup signing server, and a signature using the private key 30 of the active signing server 14 to sign the data including the public key. For example, "replacement command 0>1" may include public key 32 (PUBK_1) of the backup signing server 1 and the signature signed by the active signing server 14 (signing server 0) using private key 30 (PRVK_0) of the active signing server 14 (signing server 0).

The replacement commands are configured to be used instruct the devices 20 to replace public key 32 (PUBK_0) of the active signing server 14 (signing server 0) with the public key 32 corresponding to the replacement commands. For example, The secure storage and processing unit 16 of the active signing server 14 (signing server 0) can use its private key 30 (PRVK_0) to sign the "replacement command 0>1" corresponding to the backup signing server 1 (block 34 of Figure 1), and "replacement command 0>1" is configured to instruct device 20 to replace its stored public key PUBK_0 with public key PUBK_1; the secure storage and processing unit 16 of the active signing server 14 (signing server 0) can use its private key PRVK_0 to sign "replacement command 0>N-1" corresponding to signing server N-1 (block 36 in Fig. 1), "replacement command 0>N-1" is configured to instruct the device 20 to replace its stored public key PUBK_0 with the public key PUBK_N-1.

The interface 26 of the active signing server 14 (signing server 0) is configured to provide (e.g., send) the replacement command(s) to one or more entities (e.g., to the orchestration server 18 and/or the backup signing servers (e.g., signing server 1 to signing server N-1)), which is/are remote to the active signing server 14 and the devices 20 for storage replacement commands (step 214). In an embodiment, the orchestration server 18 may store all of the replacement commands, and/or each of the replacement commands may be stored by the relevant signing server(s) 12. For example, "command 0>1" (block 34) may be stored by signing server 1, and "command 0>N-1" (block 36) may be stored by signing server N-1.

The secure storage and processing unit 16 of the active signing server 12 is configured to generate signatures 38 using its private key 30 (PRVK_0) for authentication by devices 20 (step 216). In an embodiment, the secure storage and processing unit 16 of the active signing server 14 (signing server 0) is configured to generate hash-based signatures using private key PRVK_0 and the stored index (stored in the secure storage and processing unit 16 of the active signing server 14) for authentication by the devices 20. In embodiments in which hash-based signatures are generated, the secure storage and processing unit 16 of the active signing server 14 is configured to update (e.g., increment) the index in response to generating each hash-based signature (step 218, optionally). The interface 26 of the active signing server 14 is configured to provide the signatures 38 to the devices 20 (e.g., via the orchestration server 18), so as to provide device 20 to authenticate using stored public key 32 (PUBK_0) corresponding to the active signing server 14 (signing server 0) (step 220). The steps 216-220 may be repeated (arrow 222).

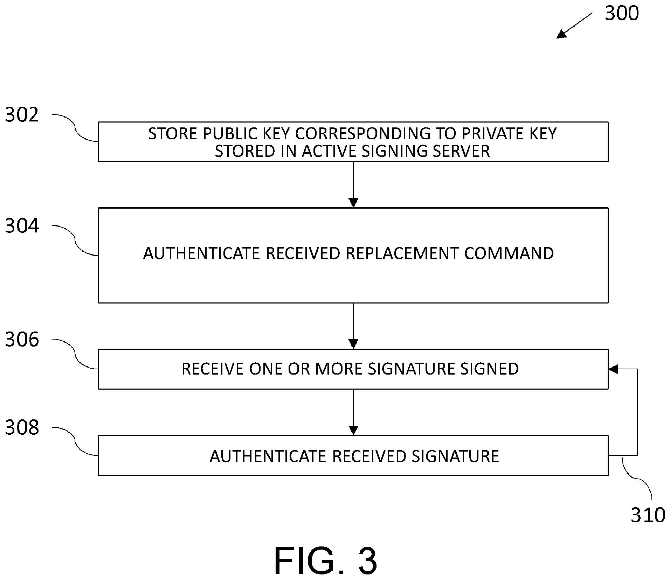

Fig. 3 is a flowchart 300 including steps in a method in one of the devices 20 in the system 10 of Fig. 1. Please refer to Fig. 1 and Fig. 3. The secure storage 24 is configured to securely store public key 32 (PUBK_0) corresponding to the private key 30 (PRVK_0) stored by the active signing server 14 (signing server 0) (step 302). The secure processor 22 is configured to authenticate the received replacement command using its stored public key 32 (PUBK_0), and in response to successful authentication, accepts the replacement command with a signature signed by the active signing server 14 (signing server 0); and in response to unsuccessful authentication, reject the replacement command without a signature signed by the active signing server 14 (signing server 0) (step 304). The secure processor 22 is configured to receive one or more signatures 38 (step 306). The secure processor 22 is configured to use its stored public key 32 (PUBK_0) to authenticate whether the received signature 38 is a signature signed by an active signing server 14 (signing server 0) (step 308). The steps 306-308 may be repeated (arrow 310).

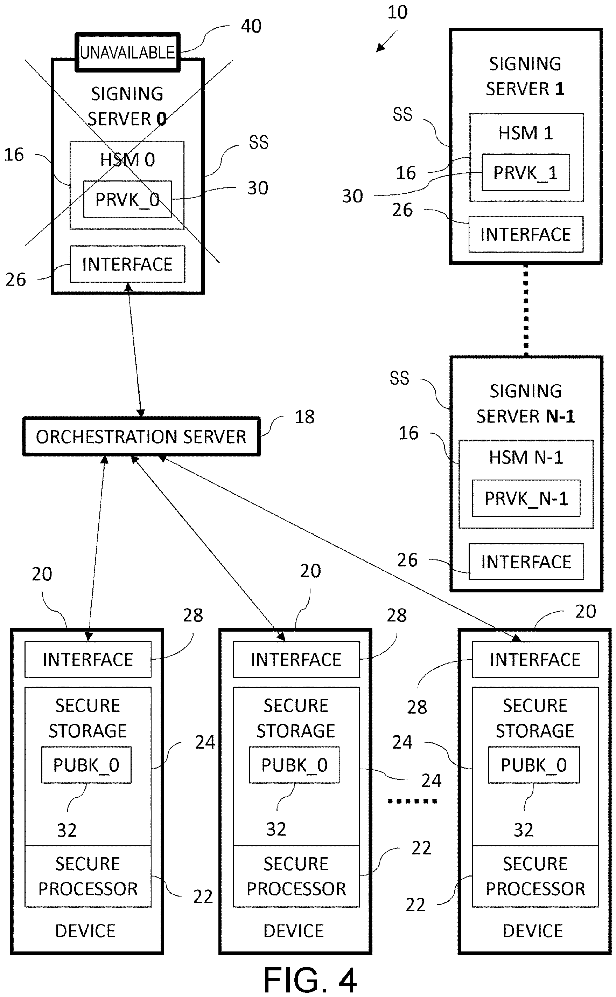

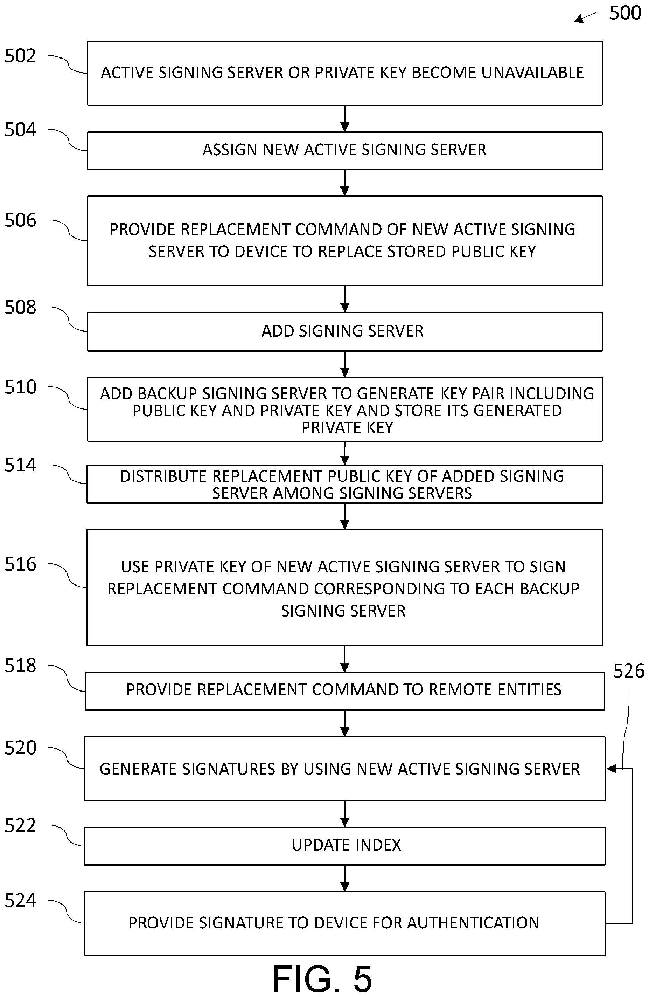

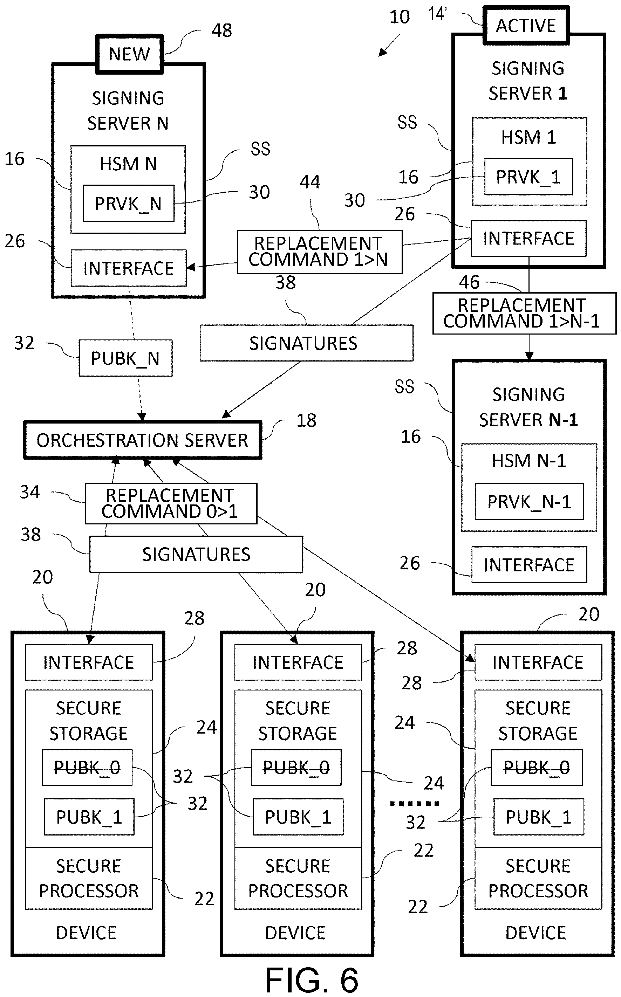

Fig. 4 is a block diagram of the system 10 of Fig. 1 illustrating the original active signing server (signing server 0) and/or its active private key 30 (PRVK_0) becoming unavailable (block 40). Fig. 5 is a flowchart 500 illustrating steps in a method of operation of the system 10 of Fig. 1 in response to the original active signing server (signing server 0) and/or the original active private key 30 (PRVK_0) becoming unavailable. Fig. 6 is a block diagram of the system 10 illustrating a situation in which system 10 allocates a new active signing server 14' (block 42).

Please refer to Fig. 4 to Fig. 6. The orchestration server 18 may be configured to detect that the active signing server 14 (signing server 0) and/or its private key 30 (PRVK_0) becomes unavailable (e.g., destroyed) (step 502).

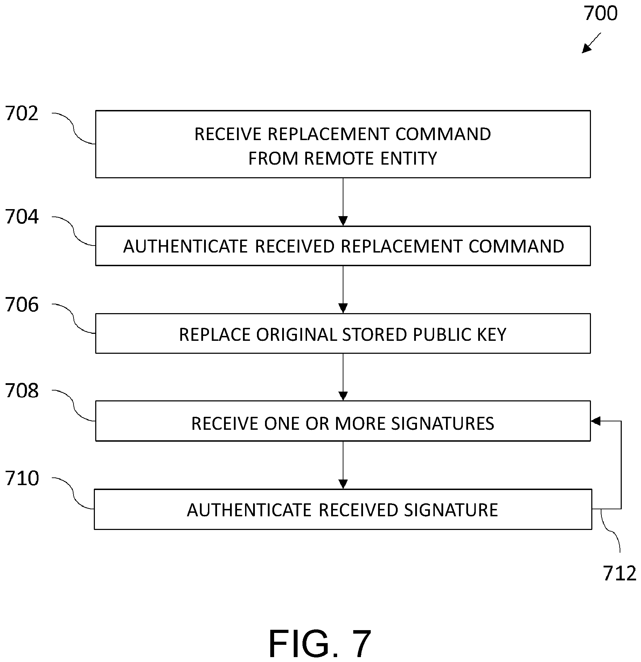

The orchestration server 18 is configured to assign a backup signing server (e.g., signing server 1) to be the new active signing server 14' (step 504). The orchestration server 18 is configured to provide the replacement command (e.g., "replacement command 0>1" (block 34 in Fig. 6)) corresponding to the new active signing server 14' (e.g., signing server 1) to the devices 20 (responsively to an outage of the original active signing server 14 (signing server 0), and/or its private key 30 (PRVK_0) becoming unavailable) to cause the devices 20 to replace the originally stored public key 32 (PUBK_0) with public key 32 (PUBK_1) corresponding to the replacement command (step 506). The steps regarding to the devices 20 replace PUBK_0 with PUBK_1 as described in more detail with reference to Fig. 7.

The orchestration server 18 may be configured to add a new signing server SS (block 48 in Fig. 6) with a secure storage and processing unit 16 in the system as a backup signing server (step 508). The secure storage and processing unit 16 (e.g., HSM N) of the added signing server SS (signing server N) is configured to generate the key pair including the public key 32 (PUBK_N) and private key 30 (PRVK_N), and store the generated private key 30 (PRVK_N) and optionally store the index (not shown) associated with the private key 30 as shown in Fig. 6 (step 510). In one embodiment, optionally, the secure storage and processing unit 16 of the added signing server SS is configured to distribute the public key 32 (PUBK _N) generated by it to all signing servers SS, and/or the orchestration server 18 (step 514).

The secure storage and processing unit 16 of the new active signing server 14' (signing server 1) is configured to sign replacement commands corresponding to each of the backup signing servers SS using its private key 30 (PRVK_1) (block 516). Wherein, each replacement command may include: the public key of each backup signing server, and a signature using the private key 30 of the active signing server 14' to sign the data including the public key. For example, "replacement command 1>N" may include the public key 32 (PUBK _N) of the backup signing server N and the signature signed by the active signing server 14 (signing server 1) using the private key 30 (PRVK_1) of the active signing server 14' (signing server 1).

The replacement commands are configured to be used to instruct the devices 20 to replace public key 32 (PUBK_1) of the active signing server with the public key 32 corresponding to the replacement command. For example, the secure storage and processing unit 16 of the active signing server 14' (signing server 1) can use its private key 30 (PRVK_1) to sign the "replacement command 1 > N-1" (Block 46 of Fig. 6) corresponding to the backup signing server N-1, "replacement command 1 > N-1" is configured to instruct the device 20 to replace its stored public key PUBK_1 with the public key PUBK_N-1; the secure storage and processing unit 16 of the active signing server 14' (signing server 1) can use its private key PRVK_1 to sign the "replacement command 1 > N" (block 44 of Fig. 6) corresponding to the signing server N. The "replacement command 1 > N" is configured to instruct the device 20 to the stored public key PUBK_1 is replaced with the public key PUBK_N.

The interface 26 of the active signing server 14' (signing server 1) is configured to provide (e.g., send) the replacement command(s) to one or more entities (e.g., to the orchestration server 18 and/or the backup signing servers (e.g., signing server 2 to signing server N)), which is/are remote to the active signing server 14' and the devices 20 to store replacement commands (step 518). In an embodiment, the orchestration server 18 may store all of the replacement commands, and/or each of the replacement commands may be stored by the relevant signing server SS. For example, "replacement command 1>N-1" (block 46 in Fig. 6) may be stored by signing server N-1, and "replacement command 1>N" (block 44 in Fig. 6) may be stored by signing server N.

The secure storage and processing unit 16 of the active signing server 14' (signing server 1) is configured to generate signatures 38 using private key 30 (PRVK_1) for authentication by devices 20 (step 520). In an embodiment, the secure storage and processing unit 16 of the active signing server 14' (signing server 1) is configured to generate hash-based signatures 38 using its private key PRVK_1 and the stored index (stored in the secure storage and processing unit 16 of the active signing server 14') for authentication by the devices 20. In embodiments where hash-based signatures are generated, the secure storage and processing unit 16 of the active signing server 14' is configured to update (e.g., increment) the index responsively to generating each of the hash-based signatures (step 522, optionally). The interface 26 of the active signing server 14' is configured to provide the signatures 38 to the devices 20 (e.g., via the orchestration server 18), so as to provide device 20 to authenticate using stored public key 32 (PUBK_1) corresponding to the active signing server 14' (signing server 1) (step 524). The steps 520-524 may be repeated (arrow 526).

Fig. 7 is a flowchart 700 including steps in a method in one of the devices 20 in the system 10 of Fig. 1 after assignment of the new active signing server 14' (signing server 1) (block 42). Reference is also made to Fig. 6 and Fig. 7. The secure processor 22 is configured to receive the replacement command (e.g., "replacement command 0>1" (block 34 in Fig. 6)) from the remote entity (step 702). The secure processor 22 is configured to authenticate the received replacement command using the originally stored public key 32 (PUBK_0) (the private key 30 (PRVK_0) corresponding to the original active signing server 14 (signing server 0)) to authenticate the received replacement command (block 704). The secure processor 22 is configured to, in response to successful authenticate the replacement command received (replacement command 0>1), replace the originally stored public key 32 (PRVK_0) with the public key 32 (PUBK_1) corresponding to the private key 30 (PRVK_1) of the new active signing server 14' (signing server 1)) (step 706). The secure processor 22 is configured to receive one or more signature(s) 38 (step 708). The secure processor 22 is configured to authenticate whether the received signature(s) 38 is the signed by the active signing server 14' (signing server 1) by using new public key 32 (PUBK_1) (step 710). The steps 708-710 may be repeated (arrow 712).

Based on the above, in some embodiments of the present invention, the active signing server includes a secure storage and processing unit that generates a key pair including a public key and a private key, and stores the generated private key. The public key generated by the active signing server is sent to the devices (e.g., via orchestration server) and stored in the secure storage of the devices for use of authentication. Each of the backup signing server includes a secure storage and processing unit that generates a key pair including a public key and a private key, and stores the generated private key. The secure storage and processing unit of the active signing server uses its private key to pre-sign replacement commands corresponding to each backup signing server. Each replacement command may include the public key generated by the corresponding backup signing server and the signature signed by the active signing server. Each replacement command is used to instruct the device to replace its originally stored public key with the public key corresponding to the replacement command when necessary. Each replacement command is sent to a remote entity (e.g., an orchestration server or a signing server corresponding to the replacement command) for storage. In the event that the active signing server or its private key is unavailable, the remote entity can provide this replacement command to the device. Each device uses the original public key to authenticate the authenticity of the replacement command, and replaces the original public key with the public key corresponding to the replacement command in response to successful authentication. In this way, each device can protect its currently stored public keys by accepting replacement commands signed by a live signing server and rejecting replacement commands that are not signed by the signing server. Then, the signing server corresponding to the replacement command becomes the new active signing server and can use its private key to generate signatures so that each device can use the new public key to authenticate the data.

In addition, the new signing server can then use its private key to sign new replacement command corresponding to each backup signing server, which can be used to instruct the device to replace its stored public key again with one public key generated by other backup signing server when necessary. Each new replacement command is sent to a remote entity (e.g., an orchestration server or a signing server corresponding to the replacement command) for storage.

In practice, some or all of these functions may be combined in a single physical component or, alternatively, implemented using multiple physical components. These physical components may comprise hard-wired or programmable devices, or a combination of the two. In some embodiments, at least some of the functions of the processing circuitry may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

## Claims

1. A secure key replacement system (10), comprising an active signing server (14) including:
a secure storage and processing unit (16) configured to:
store a first private key (30);
generate signatures (38) using the first private key (30) for authentication by devices (20) storing a first public key (32) forming a key pair with the first private key (30); and
sign a replacement command using the first private key (30), the replacement command being configured to be used to instruct the devices (20) to replace the first public key (32) with a second public key (32) forming a key pair with a second private key (32); and
an interface (26) configured to provide the signatures (38) to the devices and the replacement command to at least one entity, which is remote to the active signing server (14) and the devices (20) to store the replacement command, the at least one entity including an orchestration server (18) and/or at least one other signing server (SS).

2. The secure key replacement system according to claim 1, further comprising N signing servers including the active signing server (14) and N-1 signing servers (SS), wherein:
the N-1 signing servers (SS) are configured to generate N-1 corresponding key pairs, each key pair including a respective new public key and a respective new private key;
the secure storage and processing unit (16) of the active signing server (14) is configured to sign N-1 replacement commands using the first private key (30), the N-1 replacement commands being configured to instruct the devices (20) to replace the first public key (32) with the respective new public key (32); and
the interface (26) is configured to provide the N-1 replacement commands to the orchestration server (18) and/or the N-1 signing servers (SS).

3. The secure key replacement system according to claim 1, wherein the secure storage and processing unit (16) is configured to:
store an index;
generate hash-based signatures using the first private key (30) and the stored index for authentication by the devices (20); and
update the index responsively to generating each of the hash-based signatures.

4. The secure key replacement system according to claim 1, wherein the orchestration server (18) is configured to provide the replacement command to the devices to cause the devices to replace the first public key with the second public key.

5. The secure key replacement system according to claim 4, wherein the orchestration server (18) is configured to provide the replacement command to the devices responsively to an outage of the active signing server (14), or the first private key (30) being destroyed or unavailable for use by the active signing server (14).

6. The secure key replacement system according to claim 4, further comprising a new active signing server (48) including:
a new secure storage and processing unit (16) configured to:
store the second private key (30);
generate signatures (38) using the second private key (30) for authentication by the devices (20) storing the second public key (32); and
sign a new replacement command using the second private key (30), the new replacement command being configured to be used to instruct the devices (20) to replace the second public key (32) with a third public key (32) forming a key pair with a third private key (30); and
a new interface configured to provide the new replacement command to the at least one entity.

7. The secure key replacement system according to claim 1, further comprising a given device of the devices, the given device comprising:
a secure storage (24) configured to securely store the first public key (32); and
a secure processor (22) configured to:
reject an instruction to replace the first public key (32), the instruction not being authorized by a signature formed using the first private key (30);
receive the replacement command signed by the first private key (30);
authenticate the replacement command using the first public key (32); and
replace the first public key with the second public key (32) responsibly to authenticating the replacement command using the first public key (32).

8. The secure key replacement system according to claim 7, wherein the secure processor of the given device is configured to:
authenticate using the first public key signatures signed by the active signing server (14'); and
after the first public key (32) is replaced with the second public key (32), authenticate using the second public key (32) signatures signed by a new active signing server (48).

9. A secure key replacement device, comprising:
a secure storage (24) configured to securely store a first public key (32) forming a key pair with a first private key (30) stored by an active signing server (14); and
a secure processor (22) configured to:
reject an instruction to replace the first public key (32), the instruction not being authorized by a signature (38) formed by the active signing server (14) using the first private key (30);
receive a replacement command signed by the first private key (30), the replacement command being configured to be used to instruct the device (20) to replace the first public key (32) with a second public key (32) forming a key pair with a second private key (30) stored by a new active signing server (48);
authenticate the replacement command using the first public key (32); and
replace the first public key (32) with the second public key (32) responsibly to authenticating the replacement command using the first public key (32).

10. The secure key replacement device according to claim 9, wherein the secure processor is configured to:
authenticate using the first public key (32) signatures signed by the active signing server (14'); and
after the first public key is replaced with the second public key, authenticate using the second public key signatures signed by the new active signing server (48).

11. A secure key replacement method, comprising:
storing a first private key (30);
generating signatures by an active signing server (14) using the first private key (30) for authentication by devices storing a first public key (32) forming a key pair with the first private key (30);
signing a replacement command by the active signing server (14) using the first private key (30), the replacement command being configured to be used to instruct the devices (20) to replace the first public key (32) with a second public key (32) forming a key pair with a second private key (30); and
providing the signatures to the devices (20) and the replacement command to at least one entity, which is remote to an active signing server (14) and the devices (20) to store the replacement command, the at least one entity including an orchestration server (18) and/or at least one other signing server (SS).

12. The secure key replacement method according to claim 11, further comprising:
N-1 signing servers (SS) generating N-1 corresponding key pairs, each key pair including a respective new public key (32) and a respective new private key (30);
a secure storage and processing unit (16) of the active signing server (SS) signing N-1 replacement commands using the first private key (30), the N-1 replacement commands being configured to instruct the devices (20) to replace the first public key (32) with the respective new public key (32); and
providing the N-1 replacement commands to the orchestration server (18) and/or the N-1 signing servers (SS).

13. The secure key replacement method according to claim 11, further comprising:
storing an index;
generating hash-based signatures using the first private key (30) and the stored index for authentication by the devices (20); and
updating the index responsively to generating each of the hash-based signatures.

14. The secure key replacement method according to claim 11, further comprising providing the replacement command to the devices (20) to cause the devices to replace the first public key (32) with the second public key (32).

15. The secure key replacement method according to claim 14, wherein the providing the replacement command to the devices (20) is performed responsively to an outage of the active signing server (14'), or the first private key (30) being destroyed or unavailable for use by the active signing server (14').

16. The secure key replacement method according to claim 14, further comprising:
storing the second private key by a new active signing server (48);
generating signatures using the second private key (30) for authentication by the devices storing the second public key (32);
signing a new replacement command using the second private key (30), the new replacement command being configured to be used to instruct the devices to replace the second public key (32) with a third public key (32) forming a key pair with a third private key (30); and
providing the new replacement command to the at least one entity.

17. The secure key replacement method according to claim 11, further comprising:
receiving the replacement command signed by the first private key (30);
authenticating the replacement command using the first public key (32); and
replacing the first public key (32) with the second public key (32) responsibly to authenticating the replacement command using the first public key (32).

18. The secure key replacement method according to claim 17, further comprising:
authenticating using the first public key (32) signatures signed by the active signing server (14'); and
after the first public key (32) is replaced with the second public key (32), authenticating using the second public key (32) signatures signed by a new active signing server (48).

19. A secure key replacement method, comprising:
securely storing a first public key (32) forming a key pair with a first private key (30) stored by an active signing server (14');
receiving a replacement command signed by the first private key (30), the replacement command being configured to be used to instruct the device (20) to replace the first public key (32) with a second public key (32) forming a key pair with a second private key (30) stored by a new active signing server (48);
authenticating the replacement command using the first public key (32); and
replacing the first public key (32) with the second public key (32) responsibly to authenticating the replacement command using the first public key (32).

20. The secure key replacement method according to claim 19, further comprising:
authenticating using the first public key (32) signatures signed by the active signing server (14'); and
after the first public key (32) is replaced with the second public key (32), authenticating using the second public key (32) signatures signed by the new active signing server (48).
